# EUROPÄISCHE PATENTSCHRIFT

(11) **EP 0 858 944 B1**
(45) Veröffentlichungstag und Bekanntmachung des Hinweises auf die Patenterteilung: **04.10.2001**
(21) Anmeldenummer: 97122370.6
(22) Anmeldetag: 18.12.1997
(51) Int. Cl.: B62D 35/00

(54) **Kraftfahrzeug mit einer bugseitigen Luftführungsvorrichtung**
Motor vehicle with a front side air guiding device
Véhicule automobile comportant un dispositif de conduite d'air dans la partie avant

(30) Priorität: 12.02.1997 DE 19705268
(43) Veröffentlichungstag der Anmeldung: 19.08.1998
(73) Patentinhaber: Dr.Ing.h.c. F. Porsche Aktiengesellschaft, 70435 Stuttgart (DE)
(72) Erfinder: Preiss, Michael, 71665 Vaihingen (DE)

(56) Entgegenhaltungen:
- EP-A- 0 213 387

## Beschreibung

Die Erfindung bezieht sich auf ein Kraftfahrzeug mit einer bugseitigen Luftführungsvorrichtung gemäß dem Oberbegriff des Patentanspruchs 1.

Aus der EP 0 213 387 B1 geht ein Kraftfahrzeug mit einer bugseitigen Luftführungsvorrichtung hervor, wobei ein durch einen aufbauseitig angeordneten Kühler hindurchgeführter erster Luftstrom durch eine an einem Bugunterteil unmittelbar vor den angrenzenden Vorderrad angeordnete Ausblaseöffnung in Richtung Fahrbahn ausströmt und im Fahrbetrieb vor dem Vorderrad einen Luftkeil erzeugt, wodurch ein zwischen der Fahrbahn und der Wagenunterseite hindurchgeführter zweiter Luftstrom seitlich um das Vorderrad herumgeführt wird. Durch das Ausblasen des ersten, eine geringere kinetische Energie aufweisenden Luftstroms A unmittelbar vor die Vorderräder wird der zweite, eine größere kinetische Energie aufweisende Luftstrom B seitlich um die Vorderräder herumgeführt, wodurch der Luftwiderstandsbeiwert reduziert wird.

Nachteilig an diesem Wirkprinzip ist allerdings, daß der Vorderachsauftrieb gesteigert wird, da der zur Fahrbahn hin ausgeblasene Luftstrom eine nach oben gerichtete Kraftkomponente am Kraftfahrzeug verursacht.

Aufgabe der Erfindung ist es, bei einem Kraftfahrzeug mit der eingangs beschriebenen Luftführungsvorrichtung solche Vorkehrungen zu treffen, daß bei wesentlicher Beibehaltung der verbesserten Vorderradumströmung keine äuftriebsverursachende Kraftkomponente an den Vorderrädern auftritt.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung einer auf der der Fahrbahn zugekehrten Seite des Bugunterteils vorgesehenen Umlenkschaufel nach der Ausblasöffnung der ausgeblasene Luftstrom zur Fahrzeugseite hin umgeleitet wird, wodurch die auftriebsverursachende Kraftkomponente entfällt.

Neben dem Umlenken der Luftströmung führt der auftretende Impuls des ersten Luftstroms A zu einer Kraftkomponente nach unten und damit zu verringertem Vorderachsauftrieb.

Die luftführende Funktion dieser vorzugsweise parallel zur Strömungsrichtung angeordneten Umlenkschaufel egalisiert Verluste im CW-Wert, die dadurch entstehen, daß die Wirkung des Ausblasestroms auf den Luftwiderstand durch die Umlenkung nicht optimal erhalten werden kann.

Ferner wird durch die Anordnung der Umlenkschaufeln vor den Ausblassöffnungen die Bremsenkühlung um etwa 15 bis 20% erhöht. Die Umlenkschaufeln bestehen wegen der Bodenfreiheit und der Beschädigungsgefahr vorzugsweise aus elastischem Werkstoff und sind durch Schrauben, Anspritzen oder dergleichen mit dem Bugunterteil verbunden.

Ein Ausführungsbeispiel der Erfindung ist in der Zeichnung dargestellt und wird im folgenden näher erläutert.

Es zeigt
- Fig. 1: eine Teilseitenansicht eines vorderen Bereiches eines Personenwagens mit einer aus dem Stand der Technik bekannten bugseitigen Luftführungsvorrichtung,
- Fig. 2: eine Ansicht von schräg vorne auf die vor dem Vorderrad angeordnete Ausblasöffnung der Luftführungsvorrichtung und die erfindungsgemäße Umlenkschaufel,
- Fig. 3: eine Teildraufsicht auf den Bugbereich des Personenwagens mit der Ausblasöffnung und der Umlenkschaufel,
- Fig. 4: eine Ansicht entsprechend Fig. 2 einer weiteren Ausführungsform der Umlenkschaufel,
- Fig. 5: eine Ansicht entsprechend Fig. 2 mit verschiedenen Alternativen bezüglich des Beschnitts der zur Fahrzeugaußenseite weisenden Schaufelkante und
- Fig. 6: einer Ansicht entsprechend Fig. 2, wobei die Umlenkschaufel an ihrem hinteren Ende mit einem herkömmlichen Vorderradspoiler kombiniert ist.

Das durch einen Personenwagen gebildete Kraftfahrzeug 1 besitzt im dargestellten Bereich einen Aufbau 2 und Vorderräder 3. Innerhalb des Aufbaus 2 ist eine kanalförmige Luftführungsvorrichtung 4 für einen ersten Luftstrom A vorgesehen. Dieser gelangt über eine bugseitige Eintrittsöffnung 5 in die Luftführungsvorrichtung 4, durchströmt diese und wird zu einer an der Wagenunterseite 6 vorgesehenen Ausblasöffnung 7 geleitet. Danach wird der erste Luftstrom A mit einem zwischen der Wagenunterseite 6 und einer Fahrbahn 8 hindurchströmenden zweiten Luftstrom B zusammengeführt.

Damit der zweite Luftstrom B verwirbelungsarm zwischen Wagenunterseite 6 und Fahrbahn 8 hindurchströmen kann, ist die Wagenunterseite 6 mit einem aerodynamisch ausgebildeten, glattflächigen Verkleidungsteil versehen. Das Verkleidungsteil wird im vorderen Bereich durch ein Bugunterteil 9 gebildet. Zur Vermeidung einer direkten Anströmung der Vorderräder 3 durch den Luftstrom B sind die am Bugunterteil 9 angeordneten Ausblasöffnungen 7 für den ersten Luftstrom A unmittelbar vor und ausschließlich im Bereich der Vorderräder 3 vorgesehen.

Innerhalb der Luftführungsvorrichtung 4 ist eine durch einen Kühler 10 gebildete Einrichtung 11 zur Verringerung der Strömungsgeschwindigkeit des ersten Luftstromes A angeordnet, so daß der erste Luftstrom A nach der Ausblasöffnung 7 eine geringere kinetische Energie aufweist als der zwischen Wagenunterseite 6 und Fahrbahn 8 hindurchtretende zweite Luftstrom B. Jedoch liegt beim ersten Luftstrom A ein höheres Druckniveau vor als beim zweiten Luftstrom B, d.h. der erste Luftstrom A bildet vor den Vorderrädern 3 ein aufrechtes leitkörperartiges Polster (Luftkeil), um das der zweite Luftstrom B seitlich herumgeleitet wird. Durch das Ausblasen des Luftstromes A vor die Vorderräder 3 wird deren Umströmung aerodynamisch verbessert.

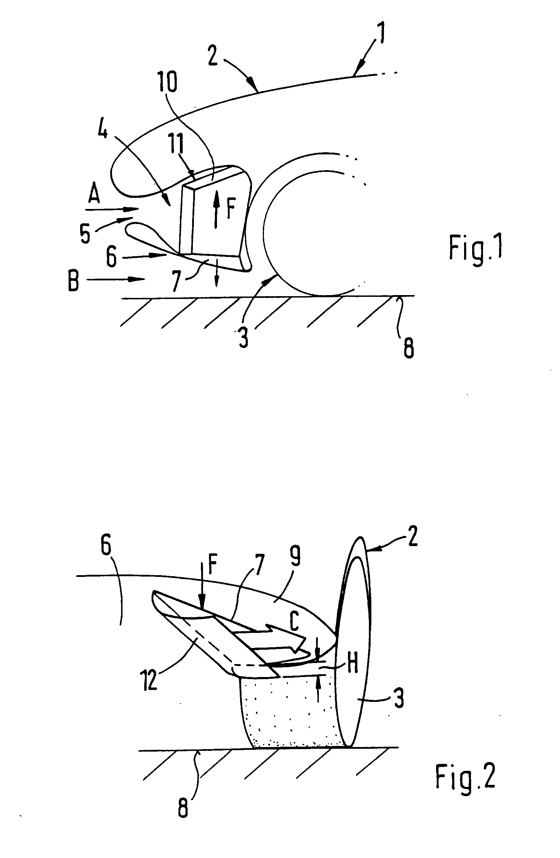

Damit beim Ausblasen des Luftstromes A eine auftriebsverursachende Kraftkomponente F (wie beim Stand der Technik gemäß Fig. 1 dargestellt) vermieden wird, ist erfindungsgemäß vorgesehen, daß auf der der Fahrbahn 8 zugekehrten Seite des Bugunterteils 6 im Bereich jeder Ausblasöffnung 7 eine Umlenkschaufel 12 angeordnet ist, die den ausgeblasenen Luftstrom A zur Fahrzeugseite C hin umleitet. Durch die Umlenkschaufel 12 entfällt die auftriebsverursachende Kraftkomponente. Der auftretende Impuls der Kühlerabluftströmung (= entspricht Luftstrom A) führt zu einer Kraftkomponente nach unten und damit zu verringertem Vorderachsauftrieb (siehe Fig. 2). Die luftführende Funktion der vorzugsweise parallel zur Strömungsrichtung angeordnete Umlenkschaufel 12 egalisiert Verluste im CW-Wert, die dadurch entstehen, daß die Wirkung des Ausblasestroms A auf den Luftwiderstand durch die Umlenkung nicht optimal erhalten werden kann.

Die Umlenkschaufel 12 ist wegen der im Bodenbereich auftretenden Beschädigungsgefahr und der Bodenfreiheit vorzugsweise aus flexiblem Material hergestellt (z.B. Gummi, Kunststoff oder dergleichen) und relativ dünnwandig ausgebildet (z.B. Zinn). Der Umlenkradius R der Umlenkschaufel 12 soll vorzugsweise der Höhe H entsprechen, wobei der Radius allerdings 10mm nicht unterschreiten sollte.

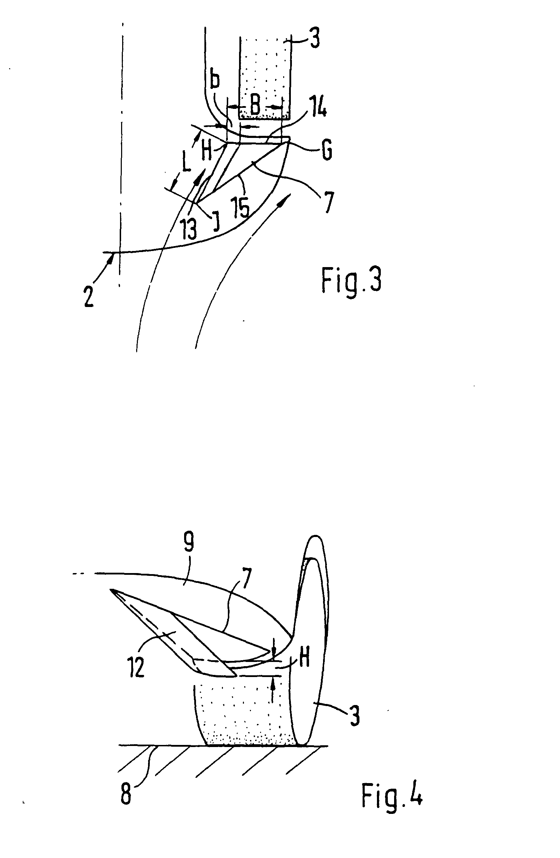

Gemäß Fig. 3 ist eine in der Draufsicht gesehen etwa dreieckförmige Ausblasöffnung 7 vorgesehen, wobei die Eckpunkte der Ausblasöffnung in Fig. 3 mit G, H und J bezeichnet sind. Die die Eckpunkte H und J verbindende erste Begrenzungskante 13 der Ausblasöffnung 7 orientiert sich zur Fahrzeugmitte hin, wogegen die durch die Eckpunkte H und G definierte zweite Begrenzungskante 14 etwa in Fahrzeugquerrichtung verläuft. Die dritte Begrenzungskante 15 verläuft schräg von vorne innen nach hinten außen und verbindet die Eckpunkte J und G.

Die vorzugsweise parallel zu der örtlich vorherrschenden Strömung angeordnete Umlenkschaufel 12 ist an der zur Fahrzeugmitte orientierten Begrenzungskante 13 der Ausblasöffnung 7 positioniert; sie ist mindestens so lang wie diese Kante. Je breiter b die Umlenkschaufel 12 ausgeführt wird, desto mehr kann der Vorderachsauftrieb reduziert werden. Ein Überschreiten der Ausblasöffnungsbreite B ist allerdings kaum noch von Nutzen. Ab etwa der halben Ausblasöffnungsbreite geht mit der Zunahme der Breite eine Erhöhung des Luftwiderstandes einher. Aus diesem Grunde ist es kaum sinnvoll, die Umlenkschaufel 12 breiter als die halbe Ausblasöffnungsbreite zu dimensionieren. Ferner wird dann der Kühlluftdurchsatz in funktionsbeeinträchtigender Art eingeschränkt.

Je höher H die Umlenkschaufel 12 ausgeführt wird, desto mehr kann der Vorderachsauftrieb reduziert werden. Bis zu einer Schaufelhöhe von 30mm wirkt sich die Höhe H nicht nachteilig auf den Luftwiderstand aus. Darüber steigt mit zunehmender Höhe auch der Luftwiderstand. Die für ein Fahrzeug optimale Schenkelhöhe ist Auslegungssache aus dem Bedarf an Vorderachsabtrieb und dem noch akzeptablen Verlust an Luftwiderstand. Die Höhe H definiert den lichten Abstand zwischen Bugunterteil 9 und Umlenkschaufel 12.

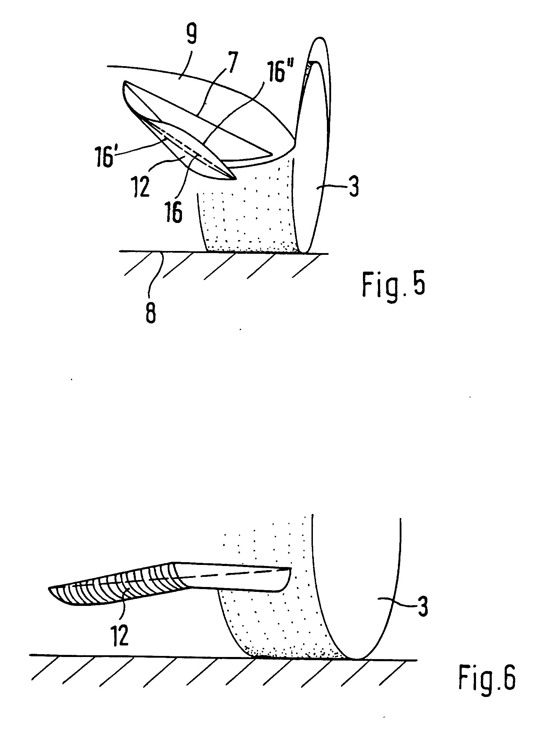

Wegen eines vorgegebenen Böschungswinkel kann die Schaufelhöhe gemäß Fig. 4 vorn bei null beginnend bis auf die Sollhöhe am Ende ansteigen. Dabei sind nur geringe Einbußen der aerodynamischen Leistung hinzunehmen. Der Beschnitt der zur Fahrzeugaußenseite weisenden Schaufelkante kann, wenn wegen des Packages erforderlich (Böschungswinkel), diagonal gerade, diagonal konvex oder diagonal konkav erfolgen. In Fig. 5 sind die drei unterschiedlichen Beschnitte der zur Fahrzeugaußenseite weisenden Schaufelkante mit den Bezugszeichen 16,16' und 16" versehen. Am hinteren Ende kann die Umlenkschaufel 12 mit einem konventionellen Vorderradspoiler verbunden werden. Dies kann durch eine mechanische Verbindung erfolgen oder einteilig dargestellt sein. Dadurch kann eine vorteilhafte Versteifung der Umlenkschaufel erreicht werden.

## Patentansprüche

1. Kraftfahrzeug mit einer bugseitigen Luftführungsvorrichtung, wobei ein durch einen Kühler hindurchgeführter erster Luftstrom (A) durch an einem Bugunterteil unmittelbar vor den angrenzenden Vorderrädern angeordnete Ausblaseöffnung in Richtung Fahrbahn ausströmt und im Fahrbetrieb vor den Vorderrädern einen Luftkeil erzeugt, so daß ein zweiter zwischen der Fahrbahn und der Wagenunterseite hindurchgeführter Luftstrom (B) durch den Luftkeil seitlich um die Vorderräder herumgeführt swird, **dadurch gekennzeichnet, daß** in Strömungsrichtung des Luftstromes (A) gesehen den Ausblasöffnungen (7) nachgeschaltet jeweils eine Umlenkschaufel (12) vorgesehen ist, die den durch die Ausblaseöffnungen (7) austretenden Luftstrom (A) zur Fahrzeugaußenseite hin umleitet.

2. Kraftfahrzeug nach Anspruch 1, **dadurch gekennzeichnet, daß** die Umlenkschaufel (12) aus einem flexiblen Werkstoff gefertigt ist.

3. Kraftfahrzeug nach Anspruch 1, **dadurch gekennzeichnet, daß** die Umlenkschaufel (12) an der Unterseite des Bugunterteils (9) angeschraubt ist.

4. Kraftfahrzeug nach Anspruch 1, **dadurch gekennzeichnet, daß** die Umlenkschaufel (12) am Bugunterteil (9) angespritzt ist.

5. Kraftfahrzeug nach Anspruch 1, **dadurch gekennzeichnet, daß** die Umlenkschaufel (12) an der zur Fahrzeugmitte hin orientierten Begrenzungskante (13) der Ausblasöffnung (7) positioniert und mindestens so lang wie die Begrenzungskante (13) ist.

6. Kraftfahrzeug nach Anspruch 1, **dadurch gekennzeichnet, daß** die Umlenkschaufel (12) vorzugsweise parallel zu der örtlich vorherrschenden Strömung angeordnet ist.

7. Kraftfahrzeug nach Anspruch 1, **dadurch gekennzeichnet, daß** die Breite (b) der Umlenkschaufel (12) vorzugsweise etwa die halbe Breite (b) der Ausblasöffnungsbreite beträgt.

8. Kraftfahrzeug nach Anspruch 1, **dadurch gekennzeichnet, daß** der Umlenkradius (R) der Umlenkschaufel (12) vorzugsweise etwa der Höhe (H) entspricht.

## Claims

1. A motor vehicle with an air-guide device at the front, wherein a first air flow (**A**) guided through a radiator flows out in the direction of the roadway through a discharge opening arranged on a lower part of the front immediately in front of the adjacent front wheels and produces a wedge of air in front of the front wheels during travel, so that a second air flow (**B**) guided between the roadway and the underside of the car is guided laterally around the front wheels by the wedge of air, **characterized in that** one respective deflecting blade (12), which guides the air flow (**A**) emerging through the discharge openings (7) to the outside of the vehicle, is provided downstream of the discharge openings (7) as viewed in the flow direction of the air flow (**A**).

2. A motor vehicle according to Claim 1, **characterized in that** the deflecting blade (12) is produced from a flexible material.

3. A motor vehicle according to Claim 1, **characterized in that** the deflecting blade (12) is screwed onto the underside of the lower part (9) of the front.

4. A motor vehicle according to Claim 1, **characterized in that** the deflecting blade (12) is injected-moulded onto the lower part (9) of the front.

5. A motor vehicle according to Claim 1, **characterized in that** the deflecting blade (12) is positioned on the boundary edge (13) of the discharge opening (7) orientated towards the middle of the vehicle and is at least as long as the boundary edge (13).

6. A motor vehicle according to Claim 1, **characterized in that** the deflecting blade (12) is arranged preferably parallel to the locally prevailing flow.

7. A motor vehicle according to Claim 1, **characterized in that** the width (**b**) of the deflecting blade (12) is preferably substantially half the width (**b**) of the discharge opening width.

8. A motor vehicle according to Claim 1, **characterized in that** the deflecting radius **(R)** of the deflecting blade (12) preferably corresponds to substantially the height **(H)**.

## Revendications

1. Véhicule automobile comportant un dispositif de guidage d'air à l'avant, un premier courant d'air (A), guidé à travers un radiateur, s'écoulant en direction de la chaussée, à travers une ouverture d'échappement disposée sur une partie inférieure avant, directement devant les roues avant adjacentes, et produisant un cône d'air devant les roues avant, pendant la marche, de sorte qu'un deuxième courant d'air (B), guidé entre la chaussée et la partie inférieure de la caisse, est guidé latéralement autour des roues avant, par le cône d'air, **caractérisé en ce que** derrière chacune des ouvertures d'échappement (7), vu dans le sens d'écoulement du courant d'air (A), il est monté un déflecteur (12) qui dévie le courant d'air (A), sortant par les ouvertures d'échappement (7), vers le côté extérieur du véhicule.

2. Véhicule automobile selon la revendication 1, **caractérisé en ce que** le déflecteur (12) est réalisé dans une matière flexible.

3. Véhicule automobile selon la revendication 1, **caractérisé en ce que** le déflecteur (12) est vissé sur le côté inférieur de la partie inférieure (9) de l'avant.

4. Véhicule automobile selon la revendication 1, **caractérisé en ce que** le déflecteur (12) est moulé par injection sur la partie inférieure (9) de l'avant.

5. Véhicule automobile selon la revendication 1, **caractérisé en ce que** le déflecteur (12) est positionné sur le bord de délimitation (13), orienté vers le milieu du véhicule, de l'ouverture d'échappement (7) et est au moins aussi long que le bord de délimitation (13).

6. Véhicule automobile selon la revendication 1, **caractérisé en ce que** le déflecteur (12) est disposé de préférence parallèlement à l'écoulement prédominant localement.

7. Véhicule automobile selon la revendication 1, **caractérisé en ce que** la largeur (b) du déflecteur (12) est de préférence environ égale à la moitié de la largeur (B) de l'ouverture d'échappement.

8. Véhicule automobile selon la revendication 1, **caractérisé en ce que** le rayon de déviation (R) du déflecteur (12) correspond de préférence approximativement à la hauteur (H).
